# EUROPEAN PATENT SPECIFICATION

(11) **EP 2 159 315 B1**
(45) Date of publication and mention of the grant of the patent: **25.01.2012**
(21) Application number: 08163346.3
(22) Date of filing: 29.08.2008
(51) Int. Cl.: D06F 39/00, G01B 7/00, G01D 3/00, G01D 5/20

(54) **Inductive transducer, for electric household appliances, with an electric calibration module, and method of calibrating an inductive transducer**
Induktiver Wandler für elektrische Haushaltsgeräte mit einem elektrischen Kalibriermodul und Verfahren zum Kalibrieren eines induktiven Wandlers
Transducteur inductif pour appareils électroménagers doté d'un module d'étalonnage électrique et procédé d'étalonnage du transducteur inductif

(43) Date of publication of application: 03.03.2010
(73) Proprietor: Electrolux Home Products Corporation N.V., 1130 Brussels (BE)
(72) Inventor: Ius, Nicola, 33080 Zoppola (IT)
(74) Representative: Nardoni, Andrea

(56) References cited:
- EP-A- 1 264 925
- US-A1- 2006 283 211
- US-B1- 6 487 896

## Description

The present invention relates to an inductive transducer with an electric calibration module, and to a method of calibrating the inductive transducer.

More specifically, the present invention relates to an inductive transducer that may be used, for example, as a pressure/position transducer in laundry washing machines or dishwashers or other similar electric household appliances.

More specifically, the present invention relates to an inductive transducer of the type comprising a rigid casing with an inner measuring chamber for receiving a pressurized fluid; a deformable membrane defining a wall of the inner measuring chamber, and which deforms under pressure of the fluid fed into the inner measuring chamber; a winding or coil; an interacting device which displacement of the membrane causes to interact magnetically with the coil to vary the inductance of the coil as a function of the position of the interacting device with respect to the coil; an electric circuit connected to the coil to supply an electric signal in which a parameter, e.g. frequency, varies as a function of the inductance of the coil.

US 2006/ 0283211 discloses the preamble of claim 1.

As is known, electric performance of transducers of the above type is represented as a whole by a frequency/pressure transduction curve, which is characterized substantially by two transduction parameters : an offset parameter indicating an initial frequency/pressure value; and a slope parameter indicating the frequency slope of the electric signal generated by the transducer alongside variations in pressure of the fluid.

A typical problem of transducers of the above type is initial calibration of the transduction parameters.

Mechanical solutions are known, which provide for calibrating the transducer by adjusting the position of one or more mechanical members to modify the position of the interacting device with respect to the coil, and/or the characteristics of one or more suspension and/or return springs associated with the membrane and/or interacting device.

To be calibrated mechanically, transducers of the above type are necessarily complicated and therefore expensive to produce. Moreover, actual calibration is a painstaking job and subject to change with time.

It is an object of the present invention to provide an inductive transducer featuring an electric transduction curve calibration module, which is cheap to produce and provides for simplifying initial calibration of transduction parameters as compared with mechanical calibration of known transducers described above.

According to the present invention, there is provided an inductive transducer for electric household appliances, as claimed in Claim 1 and preferably, though not necessarily, in any one of the Claims depending directly or indirectly on Claim 1.

According to the present invention, there is also provided a method of calibrating the transduction curve of the inductive transducer, as claimed in Claim 9 and preferably, though not necessarily, in any one of the Claims depending directly or indirectly on Claim 9.

A non-limiting embodiment of the present invention will be described by way of example with reference to the accompanying drawings, in which:
Figure 1 shows a schematic of an inductive transducer for electric household appliances, in accordance with the teachings of the present invention;
Figure 2 shows a schematic of a different embodiment of the inductive transducer in Figure 1;
Figures 3 to 7 show schematics of respective variations of the inductive transducer in Figure 1.

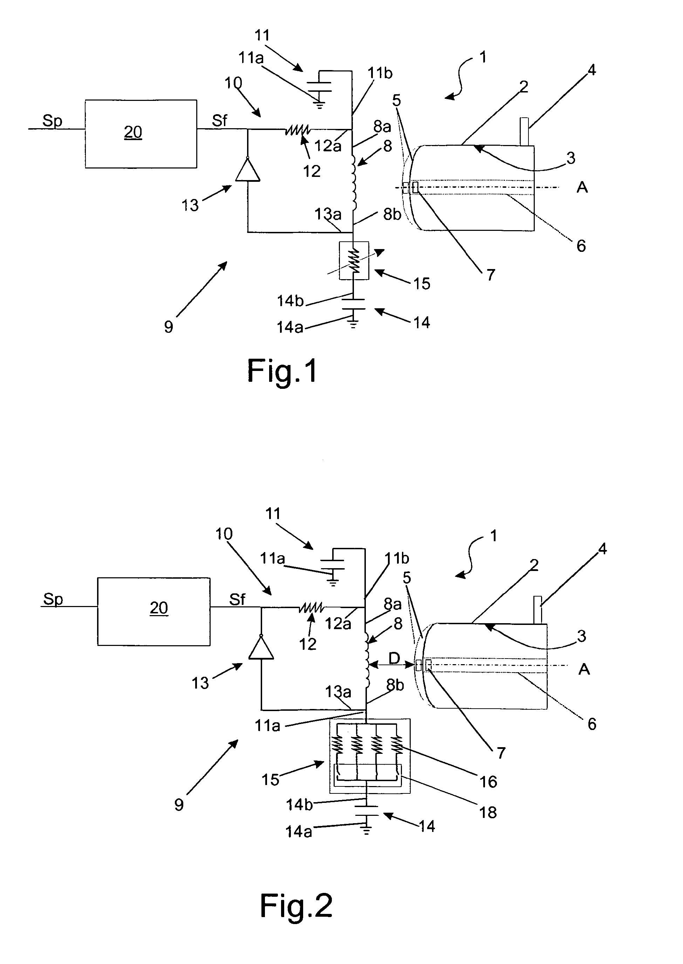

Number 1 in Figure 1 indicates as a whole an inductive transducer which may be installed in an electric household appliance (not shown) - in particular, a laundry washing machine or dishwasher or any other similar type of appliance - to determine the pressure of a fluid.

Transducer 1 comprises a rigid casing 2 having an inner measuring chamber 3 into which a pressurized fluid is fed by a pipe 4; a deformable membrane 5 fitted to inner measuring chamber 3, and which is deformed by the pressure of the fluid fed into inner measuring chamber 3, so as to define, with inner measuring chamber 3, a variable-volume chamber; a movable assembly 6 connected to membrane 5 to move along a longitudinal axis A as membrane 5 is deformed; and a ferromagnetic module 7 connected to movable assembly 6 to move along longitudinal axis A as membrane 5 is deformed.

Transducer 1 also comprises a winding or coil 8 substantially facing membrane 5, and which has an inductance L varying as a function of the distance D between coil 8 and ferromagnetic module 7 connected to membrane 5.

In the example shown, deformation of membrane 5 of transducer 1 depends on the pressure of the fluid fed into inner measuring chamber 3. As pressure increases, membrane 5 deforms, and moves ferromagnetic module along longitudinal axis A. As it moves towards coil 8, ferromagnetic module 7 produces a variation in inductance L in function of the distance D between the coil and membrane 5, which distance D is proportional to the pressure of the fluid fed into inner measuring chamber 3.

Transducer 1 also comprises an electric circuit 9 connected to coil 8 to generate an electric signal Sf, a parameter - in particular, the frequency - of which varies as a function of inductance L of coil 8.

More specifically, electric circuit 9 substantially comprises an oscillating stage 10, in turn comprising a capacitor 11 having a first terminal 11a at ground potential, and a second terminal 11b connected to a terminal 8a of coil 8; and a resistor 12 and a one-way electronic component 13, e.g. an inverter, connected to each other in series, and wherein an input terminal 13a of one-way electronic component 13 and a terminal 12a of resistor 12 are connected respectively to terminal 8b and terminal 8a of coil 8.

In the Figure 1 example, the output of one-way electronic component 13 is connected to an electric signal processing stage 20, which receives electric signal Sf of a frequency related to inductance L of coil 8, and supplies an electric signal Sp of a frequency related to the pressure of the fluid in inner measuring chamber 3.

Electric circuit 9 also comprises a capacitor 14 having a terminal 14a at ground potential, and a terminal 14b connected to terminal 8b of coil 8 via an electronic calibration module 15 for regulating the offset parameter and the slope parameter of the transduction curve of inductive transducer 1.

More specifically, in the Figure 1 example, electronic calibration module 15 comprises a resistor device of variable resistance R1, which may in turn comprise a potentiometer or resistive trimmer, the resistance of which may advantageously be regulated, when calibrating oscillating stage 10, to advantageously regulate the transduction curve, i.e. the offset parameter and slope parameter of the transduction curve, of transducer 1.

In a different embodiment shown in Figure 2, variable-resistance electronic calibration module 15 may comprise a number of resistors 16 of different resistances Ri and connected in parallel between terminal 8b and capacitor 14; and a switching device 18, e.g. microswitches, for connecting/disconnecting each resistor 16 to/from terminal 8b or the terminal of capacitor 14 to vary the total resistance R1 of calibration module 15.

The method of calibrating the transduction curve of inductive transducer 1 substantially comprises: connecting variable-resistance calibration module 15 to electric circuit 9; and adjusting the resistance R1 of calibration module 15 to achieve respective predetermined values of the transduction curve offset parameter and slope.

More specifically, the calibration method may comprise the step of connecting a resistive trimmer or potentiometer to electric circuit 9, and adjusting the resistance of the resistive trimmer by means of an adjusting device comprising a trimmer adjuster (not shown).

In a different embodiment shown in Figure 2, the calibration method may comprise connecting a number of resistors 16 of different resistances Ri in parallel between terminal 8b and capacitor 14 to form calibration module 15; providing a switching device 18, e.g. microswitches, for connecting/disconnecting each resistor 16 to/from terminal 8b and/or the terminal of capacitor 14; and opening or closing each microswitch of switching device 18 to adjust the total resistance R1 of calibration module 15 as a function of the predetermined transduction curve offset parameter and slope.

In a variation (not shown), the calibration method may comprise connecting a number of resistors 16 of different resistances Ri in parallel between terminal 8b and capacitor 14 to form a calibration module 15 having an initial total resistance R1; and selectively excluding or disabling some of resistors 16 to adjust the total resistance R1 of calibration module 15 to a resistance value related to a predetermined offset parameter and slope parameter.

More specifically, the step of selectively excluding or disabling some of resistors 16 may comprise the step of generating a laser beam to cut off certain conducting lines or tracks connecting resistors 16 to electric circuit 9.

The advantages of the method of calibrating inductive transducer 1 as described above are obvious. In addition to eliminating the need for mechanical adjusting members to calibrate the transducer, a variable-resistance electric calibration module is easy to use and greatly reduces the manufacturing cost of the transducer.

Clearly, changes may be made to transducer 1 as described herein without, however, departing from the scope of the present invention.

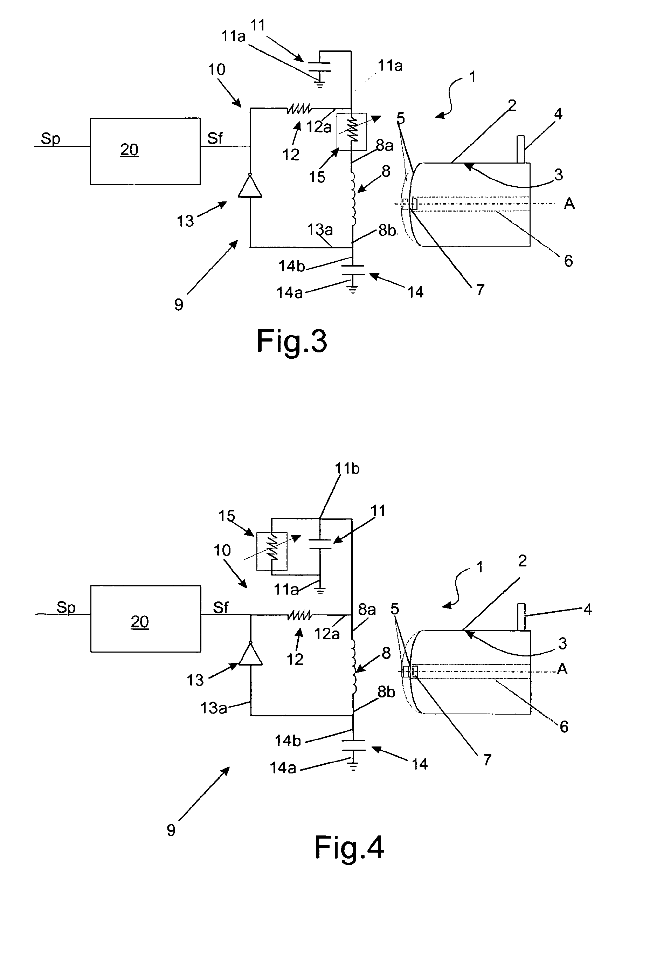

For example, in the Figure 3 variation, as opposed to being connected between terminal 14b of capacitor 14 and terminal 8b of coil 8, calibration module 15 of transducer 1 is series connected to coil 8.

In the Figure 4 variation, as opposed to being connected between terminal 14b of capacitor 14 and terminal 8b of coil 8, calibration module 15 of transducer 1 may be connected parallel to capacitor 11.

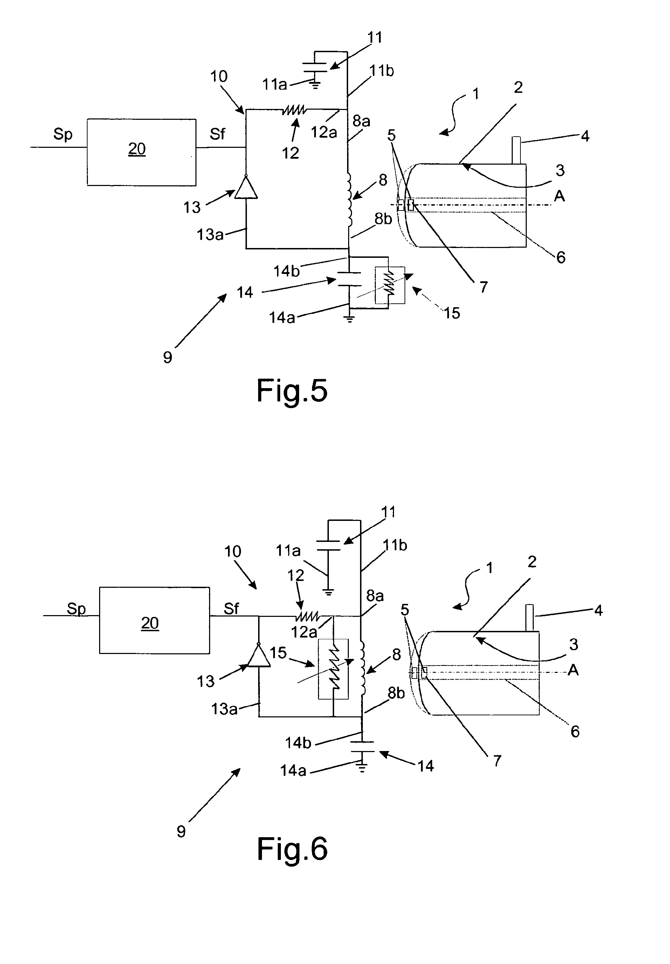

In the Figure 5 variation, as opposed to being connected between terminal 14b of capacitor 14 and terminal 8b of coil 8, calibration module 15 of transducer 1 may be connected parallel to capacitor 14.

In the Figure 6 variation, as opposed to being connected between terminal 14b of capacitor 14 and terminal 8b of coil 8, calibration module 15 of transducer 1 may be connected parallel to coil 8.

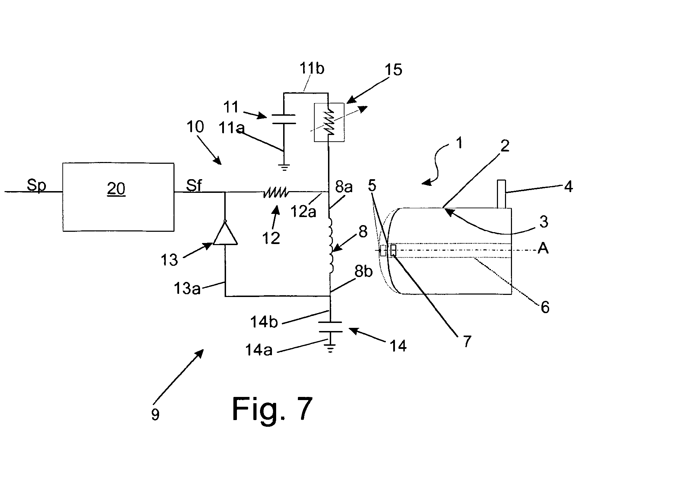

In the Figure 7 variation, as opposed to being connected between terminal 14b of capacitor 14 and terminal 8b of coil 8, calibration module 15 of transducer 1 may be series connected to capacitor 11.

## Claims

1. An inductive transducer (1) for electric household appliances and adapted to determine the pressure of a fluid, comprising a casing (2) having an inner measuring chamber (3) into which a pressurized fluid is fed; a membrane (5) fitted to the inner measuring chamber (3) and deformable by the pressure of the fluid, so as to define, with the inner measuring chamber (3), a variable-volume chamber; at least one coil (8) facing said membrane (5); interacting means (6, 7) which deformation of the membrane (5) causes to interact magnetically with said coil (8), so that the inductance (L) of the coil (8) varies as a function of the position of the interacting means (6, 7) with respect to said coil (8); and circuit means (9) connected to said coil (8) to supply an electric signal (Sf) whose frequency varies as a function of the inductance (L) of said coil (8);
said inductive transducer being **characterized in that** said circuit means (9) comprise resistive calibration means (15) of variable resistance for adjusting the fluid pressure/frequency transduction curve of said transducer.

2. A transducer as claimed in Claim 1, wherein said circuit means (9) comprise at least one capacitor connected to a terminal of said coil; said calibration means (15) being connected in series to said at least one capacitor.

3. A transducer as claimed in Claim 1, wherein said circuit means (9) comprise at least one capacitor connected to a terminal of said coil; said calibration means (15) being connected parallel to said at least one capacitor.

4. A transducer as claimed in Claim 1, wherein said calibration means (15) are connected in series to said coil (8).

5. A transducer as claimed in Claim 1, wherein said calibration means (15) are connected parallel to said coil (8).

6. A transducer as claimed in any one of the foregoing Claims, wherein said calibration means (15) comprise at least two parallel-connected resistors (16); and selecting means for selectively connecting/disconnecting each said resistor (16) to/from said circuit means (9).

7. A transducer as claimed in any one of Claims 1 to 6, wherein said calibration means (15) comprise a resistive trimmer or a potentiometer.

8. A washing machine or dishwasher comprising an inductive transducer (1) for determining the pressure of a fluid as claimed in any one of Claims 1 to 7.

9. A method of calibrating the transduction curve of an inductive transducer (1) for electric household appliances and adapted to determine the pressure of a fluid, the inductive transducer (1) comprising a casing (2) having an inner measuring chamber (3) into which a pressurized fluid is fed; a membrane (5) fitted to the inner measuring chamber (3) and deformable by the pressure of the fluid, so as to define, with the inner measuring chamber (3), a variable-volume chamber; at least one coil (8) facing said membrane (5); interacting means (6, 7) which deformation of the membrane (5) causes to interact magnetically with said coil (8), so that the inductance (L) of the coil (8) varies as a function of the position of the interacting means (6, 7) with respect to said coil (8); and circuit means (9) connected to said coil (8) to supply an electric signal (Sf) whose frequency varies as a function of the inductance (L) of said coil (8);
said method being **characterized by** comprising the steps of:
- connecting resistive calibration means (15) of variable resistance to said circuit means (9); and
- adjusting said calibration means (15) to vary said resistance and so calibrate the fluid pressure/frequency transduction curve of said transducer.

10. A method as claimed in Claim 9, wherein said calibration means comprise a resistive trimmer, and comprising the step of varying the resistance of the resistive trimmer by means of adjusting means having a member for adjusting said resistive trimmer.

11. A method as claimed in Claim 9, and comprising the steps of: connecting a number of parallel-connected resistors (16) of different resistances (Ri) to said circuit means (9) to form said calibration means (15); providing switching means (18) for connecting/disconnecting each resistor (16) to/from said circuit means (9); and controlling said switching means (18) to selectively connect/disconnect each said resistor (16) to/from the circuit means (9) and so vary the total resistance of said calibration means (15).

12. A method as claimed in Claim 9, and comprising the steps of: connecting a number of resistors (16) of different resistances (Ri) to said circuit means (9) to form said calibration means (15); and selectively excluding or disabling some of said resistors (16) from the circuit means (9) and so vary the total resistance of said calibration means (15).

13. A method as claimed in Claim 9, and comprising the steps of: connecting a number of parallel-connected resistors (16) of different resistances (Ri) to said circuit means (9) to form said calibration means (15); and generating a laser beam onto said resistors (16) of said calibration means (15) to selectively disconnect some of said resistors (16) from the circuit means (9) and so vary the total resistance of said calibration means (15).

## Patentansprüche

1. Induktiver Wandler (1) für elektrische Haushaltsgeräte, der geeignet ist, den Druck eines Fluids zu bestimmen, umfassend ein Gehäuse (2) mit einer inneren Messkammer (3) in die ein unter Druck stehendes Fluid eingespeist wird; eine Membran (5), die in die innere Messkammer (3) eingefügt ist und die durch den Druck des Fluids verformbar ist, um mit der inneren Messkammer (3) eine Kammer mit variablem Volumen zu definieren; mindestens eine Spule (8), die der Membran (5) zugewandt ist; Interaktionsmittel (6, 7), die durch eine Verformung der Membran (5) veranlasst werden, magnetisch mit der Spule (8) zu interagieren, so dass die Induktivität (L) der Spule (8) als Funktion der Position der Interaktionsmittel (6, 7) in Bezug auf die Spule (8) variiert; und Schaltungseinrichtungen (9), die mit der Spule (8) verbunden sind, um ein elektrisches Signal (Sf) zu liefern, dessen Frequenz als Funktion der Induktivität (L) der Spule (8) variiert;
wobei der induktive Wandler **dadurch gekennzeichnet ist, dass** die Schaltungseinrichtungen (9) resistive Kalibriermittel (15) mit variablem Widerstandswert umfassen, um die Fluiddruck/Frequenz-Umwandlungskurve des Wandlers einzustellen.

2. Wandler nach Anspruch 1, wobei die Schaltungseinrichtungen (9) mindestens einen Kondensator umfassen, der mit einer Anschlussklemme der Spule verbunden ist; wobei die Kalibriermittel (15) in Reihe mit dem mindestens einen Kondensator geschaltet sind.

3. Wandler nach Anspruch 1, wobei die Schaltungseinrichtungen (9) mindestens einen Kondensator umfassen, der mit einer Anschlussklemme der Spule verbunden ist; wobei die Kalibriermittel (15) parallel mit dem mindestens einen Kondensator geschaltet sind.

4. Wandler nach Anspruch 1, wobei die Kalibriermittel (15) in Reihe mit der Spule (8) geschaltet sind.

5. Wandler nach Anspruch 1, wobei die Kalibriermittel (15) parallel mit der Spule (8) geschaltet sind.

6. Wandler nach einem der vorhergehenden Ansprüche, wobei die Kalibriermittel (15) umfassen: mindestens zwei parallel geschaltete Widerstände (16) und Auswahlmittel zur selektiven Verbindung/Trennung jedes Widerstands (16) mit/von den Schaltungseinrichtungen (9).

7. Wandler nach einem der Ansprüche 1 bis 6, wobei die Kalibriermittel (15) einen resistiven Trimmer oder ein Potentiometer umfassen.

8. Waschmaschine oder Geschirrspüler, umfassend einen induktiven Wandler (1) zum Bestimmen des Drucks eines Fluids, wie er in einem der Ansprüche 1 bis 7 beansprucht wird.

9. Verfahren zum Kalibrieren der Umwandlungskurve eines induktiven Wandlers (1) für elektrische Haushaltsgeräte, der geeignet ist, den Druck eines Fluids zu bestimmen, wobei der induktive Wandler (1) umfasst: ein Gehäuse (2) mit einer inneren Messkammer (3), in die ein unter Druck stehendes Fluid eingespeist wird; eine Membran (5), die in die innere Messkammer (3) eingefügt ist und die durch den Druck des Fluids verformbar ist, um mit der inneren Messkammer (3) eine Kammer mit variablem Volumen zu definieren; mindestens eine Spule (8), die der Membran (5) zugewandt ist; Interaktionsmittel (6, 7), die durch eine Verformung der Membran (5) veranlasst werden, magnetisch mit der Spule (8) zu interagieren, so dass die Induktivität (L) der Spule (8) als Funktion der Position der Interaktionsmittel (6, 7) in Bezug auf die Spule (8) variiert; und Schaltungseinrichtungen (9), die mit der Spule (8) verbunden sind, um ein elektrisches Signal (Sf) zu liefern, dessen Frequenz als Funktion der Induktivität (L) der Spule (8) variiert;
wobei das Verfahren **dadurch gekennzeichnet ist, dass** es die folgenden Schritte umfasst:
- Anschließen der resistiven Kalibriermittel (15) mit variablem Widerstandswert an die Schaltungseinrichtungen (9); und
- Einstellen der Kalibriermittel (15), um den Widerstandswert zu variieren und so die FluiddruckFrequenz-Umwandlungskurve des Wandlers zu kalibrieren.

10. Verfahren nach Anspruch 9, wobei die Kalibriermittel einen resistiven Trimmer umfassen, und umfassend den Schritt des Variierens des Widerstandswerts des resistiven Trimmers durch Einstellmittel, die ein Element zum Einstellen des resistiven Trimmers aufweisen.

11. Verfahren nach Anspruch 9, umfassend die folgenden Schritte: Anschließen einer Anzahl parallel geschalteter Widerstände (16) mit unterschiedlichen Widerstandswerten (Ri) an die Schaltungseinrichtungen (9), um die Kalibriermittel (15) zu bilden; Bereitstellen von Schaltmitteln (18) zur Verbindung/Trennung jedes Widerstands (16) mit/von den Schaltungseinrichtungen (9), und Steuern der Schaltmittel (18), um jeden Widerstand (16) selektiv mit/von den Schaltungseinrichtungen (9) zu verbinden/trennen, um auf diese Weise den Gesamtwiderstandswert der Kalibriermittel (15) zu variieren.

12. Verfahren nach Anspruch 9, umfassend die folgenden Schritte: Anschließen einer Anzahl von Widerständen (16) mit unterschiedlichen Widerstandswerten (Ri) an die Schaltungseinrichtungen (9), um die Kalibriermittel (15) zu bilden; und selektives Ausschließen oder Deaktivieren von einigen der Widerstände (16) von den Schaltungseinrichtungen (9), um auf diese Weise den Gesamtwiderstand der Kalibriermittel (15) zu variieren.

13. Verfahren nach Anspruch 9, umfassend die folgenden Schritte: Anschließen einer Anzahl von Widerständen (16) mit unterschiedlichen Widerstandswerten (Ri) an die Schaltungseinrichtungen (9), um die Kalibriermittel (15) zu bilden; und Erzeugen eines Laserstrahls auf die Widerstände (16) der Kalibriermittel (15), um selektiv einige der Widerstände (16) von den Schaltungseinrichtungen (9) zu trennen, um auf diese Weise den Gesamtwiderstand der Kalibriermittel (15) zu variieren.

## Revendications

1. Transducteur inductif (1) pour appareils électroménagers et adapté pour déterminer la pression d'un fluide, comprenant un boîtier (2) comportant une chambre de mesure interne (3) dans laquelle un fluide pressurisé est délivré ; une membrane (5) ajustée sur la chambre de mesure interne (3) et déformable par la pression du fluide, de façon à définir, avec la chambre de mesure interne (3), une chambre à volume variable ; au moins une bobine (8) en regard de ladite membrane (5) ; des moyens d'interaction (6, 7) qu'une déformation de la membrane (5) amène à interagir magnétiquement avec ladite bobine (8), de telle sorte que l'inductance (L) de la bobine (8) varie comme une fonction de la position des moyens d'interaction (6, 7) par rapport à la bobine (8) ; et des moyens de circuit (9) connectés à ladite bobine (8) pour fournir un signal électrique (Sf) dont la fréquence varie comme une fonction de l'inductance (L) de ladite bobine (8) ; ledit transducteur inductif étant **caractérisé en ce que** lesdits moyens de circuit (9) comprennent des moyens d'étalonnage résistifs (15) de résistance variable permettant d'ajuster la courbe pression de fluide/transduction de fréquence dudit transducteur.

2. Transducteur selon la revendication 1, dans lequel lesdits moyens de circuit (9) comprennent au moins un condensateur connecté à une borne de ladite bobine ; lesdits moyens d'étalonnage (15) étant connectés en série audit au moins un condensateur.

3. Transducteur selon la revendication 1, dans lequel lesdits moyens de circuit (9) comprennent au moins un condensateur connecté à une borne de ladite bobine ; lesdits moyens d'étalonnage (15) étant connectés en parallèle audit au moins un condensateur.

4. Transducteur selon la revendication 1, dans lequel lesdits moyens d'étalonnage (15) sont connectés en série à ladite bobine (8).

5. Transducteur selon la revendication 1, dans lequel lesdits moyens d'étalonnage (15) sont connectés en parallèle à ladite bobine (8).

6. Transducteur selon l'une quelconque des revendications précédentes, dans lequel lesdits moyens d'étalonnage (15) comprennent au moins deux résistances connectées en parallèle (16) ; et des moyens de sélection permettant de connecter/déconnecter sélectivement chacune desdites résistances (16) auxdits/desdits moyens de circuit (9).

7. Transducteur selon l'une quelconque des revendications 1 à 6, dans lequel lesdits moyens d'étalonnage (15) comprennent une résistance ajustable ou un potentiomètre.

8. Machine à laver ou lave-vaisselle comprenant un transducteur inductif (1) permettant de déterminer la pression d'un fluide tel que revendiqué dans l'une quelconque des revendications 1 à 7.

9. Procédé d'étalonnage de la courbe de transduction d'un transducteur inductif (1) pour appareils électroménagers et adapté pour déterminer la pression d'un fluide, le transducteur inductif (1) comprenant un boîtier (2) comportant une chambre de mesure interne (3) dans laquelle un fluide pressurisé est délivré ; une membrane (5) ajustée sur la chambre de mesure interne (3) et déformable par la pression du fluide, de façon à définir, avec la chambre de mesure interne (3), une chambre à volume variable ; au moins une bobine (8) en regard de ladite membrane (5) ; des moyens d'interaction (6, 7) qu'une déformation de la membrane (5) amène à interagir magnétiquement avec ladite bobine (8), de telle sorte que l'inductance (L) de la bobine (8) varie comme une fonction de la position des moyens d'interaction (6, 7) par rapport à la bobine (8) ; et des moyens de circuit (9) connectés à ladite bobine (8) pour fournir un signal électrique (Sf) dont la fréquence varie comme une fonction de l'inductance (L) de ladite bobine (8) ;
ledit procédé étant **caractérisé en ce qu'**il comprend les étapes consistant à :
- connecter des moyens d'étalonnage résistifs (15) de résistance variable auxdits moyens de circuit (9) ; et
- ajuster lesdits moyens d'étalonnage (15) pour faire varier ladite résistance et ainsi étalonner la courbe pression de fluide/transduction de fréquence dudit transducteur.

10. Procédé selon la revendication 9, dans lequel lesdits moyens d'étalonnage comprennent une résistance ajustable, et comprenant l'étape consistant à faire varier la résistance de la résistance ajustable au moyen des moyens d'ajustement comportant un organe permettant d'ajuster ladite résistance ajustable.

11. Procédé selon la revendication 9, et comprenant les étapes consistant à : connecter un certain nombre de résistances connectées en parallèle (16) de résistances différentes (Ri) auxdits moyens de circuit (9) pour former lesdits moyens d'étalonnage (15) ; fournir des moyens de commutation (18) pour connecter/déconnecter chaque résistance (16) auxdits/desdits moyens de circuits (9) ; et commander lesdits moyens de commutation (18) pour connecter/déconnecter sélectivement chacune desdites résistances (16) auxdits/desdits moyens de circuits (9) et faire ainsi varier la résistance totale desdits moyens d'étalonnage (15).

12. Procédé selon la revendication 9, et comprenant les étapes consistant à : connecter un certain nombre de résistances (16) de résistances différentes (Ri) auxdits moyens de circuit (9) pour former lesdits moyens d'étalonnage (15) ; et exclure ou désactiver sélectivement certaines desdites résistances (16) des moyens de circuit (9) et faire ainsi varier la résistance totale desdits moyens d'étalonnage (15).

13. Procédé selon la revendication 9, et comprenant les étapes consistant à : connecter un certain nombre de résistances connectées en parallèle (16) de résistances différentes (Ri) auxdits moyens de circuit (9) pour former lesdits moyens d'étalonnage (15) ; et générer un faisceau laser sur lesdites résistances (16) desdits moyens d'étalonnage (15) pour déconnecter sélectivement certaines desdites résistances (16) des moyens de circuit (9) et faire ainsi varier la résistance totale desdits moyens d'étalonnage (15).
